(19) Europäisches Patentamt

European Patent Office

Office européen des brevets

(11) **EP 0 775 760 B1**

(12) **EUROPÄISCHE PATENTSCHRIFT**

(45) Veröffentlichungstag und Bekanntmachung des Hinweises auf die Patenterteilung:
**04.04.2001  Patentblatt 2001/14**

(51) Int Cl.$^7$: **C23G 1/36**

(21) Anmeldenummer: **96117653.4**

(22) Anmeldetag: **04.11.1996**

(54) **Verfahren und Anlage zur Gewinnung bzw. Rückgewinnung von Säuren aus metallhaltigen Lösungen dieser Säuren**

Process and apparatus for producing and/or recovering acids from metalliferous solutions of these acids

Procédé et appareil de production et/ou recupération d'acides à partir de solutions métallifères de ces acides

(84) Benannte Vertragsstaaten:
**BE DE ES FR GB IT SE**

(30) Priorität: **27.11.1995  AT  193195**

(43) Veröffentlichungstag der Anmeldung:
**28.05.1997  Patentblatt 1997/22**

(73) Patentinhaber: **Andritz AG**
**8045 Graz (AT)**

(72) Erfinder: **Lebl, Albert, Dr.**
**1170 Wien (AT)**

(74) Vertreter: **Schweinzer, Friedrich**
**Stattegger Strasse 18**
**8045 Graz (AT)**

(56) Entgegenhaltungen:
**EP-A- 0 296 147          DE-A- 1 546 187**
**DE-A- 2 503 142          DE-A- 4 315 551**
**DE-A- 4 402 028          FR-A- 2 428 207**
**GB-A- 1 156 063          GB-A- 1 311 757**
**US-A- 3 669 623**

## Beschreibung

Die Erfindung betrifft ein Verfahren zur Gewinnung bzw. Rückgewinnung von Säuren, insbesondere von Flußsäure, Salzsäure und Salpetersäure, aus metallhaltigen Lösungen dieser Säuren durch pyrohydrolytische Behandlung, Abtrennung der Metalle und anschließende Absorption und/oder Kondensation der dabei gebildeten Säure-Gase in einer wässrigen Absorptionslösung, wobei die entstehenden Feststoffe abgezogen werden, wobei die Abbeize noch vor der Pyrohydrolyse einer Voreindampfung unterzogen wird.

Metallhaltige, Flußsäure, Salzsäure und Salpetersäure beinhaltende Lösungen fallen zum Beispiel in der Metallindustrie als Mischsäure-Abbeize bei der Oberflächenbehandlung von normalen Stählen, rostfreien Stählen, Sonderlegierungen und Sondermetallen an. In diesen Lösungen sind freie Säuren, wie Flußsäure, Salzsäure bzw. Salpetersäure und als Fluoride, Nitride bzw. Chloridegelöste Metalle wie Eisen, Chrom und Nickel enthalten und sie müssen ab einer Metallkonzentration von ca. 35-120 g/l entsprechend der Anwendung erneuert werden. Es wurden bereits mehrere Methoden entwickelt, aus den verbrauchten Lösungen die Flußsäure, Salzsäure und Salpetersäure zur Rückführung in den Beizprozeß wiederzugewinnen, wobei auch die wegen der Umweltauflagen und immer höheren Entsorgungskosten problematische Entsorgung der verbrauchten Beizsäure weitestgehend vermieden werden kann. Bekannte Methoden zur Rückgewinnung von Flußsäure und Salpetersäure bzw. Salzsäure sind z.B. die Solventextraktion, Dialyseverfahren und die Verwendung von Ionenaustauschern.

In der AT-PS 395.312 wurde weiters vorgeschlagen, zur Rückgewinnung von Säuren aus metallhaltigen Lösungen diese Säuren durch den pyrohydrolytischen Schritt des Sprühröstens aus der Lösung freizusetzen und die dabei entstehenden Gase zu absorbieren und/oder zu kondensieren. Die Absorption bzw. die Kondensation wird dabei vorzugsweise in zwei Kolonnen durchgeführt, wobei über eine Steuerung der Kolonnentemperatur die Ausbeuten an Flußsäure und Salpetersäure bzw. Salzsäure verbessert werden kann.

Die DE-A-1546187, DE-A- 4402028, beschreiben Verfahren und Anlagen zur Rückgewinnung von Säuren aus metallhaltigen Lösungen, wobei die Abbeize pyrohydrolytisch gespalten wird und die Abgase anschließend absorbiert und/oder kondensiert werden. Es findet hier z.B. eine Erwärmung der Abbeize durch das Abgas des Reaktors in einem direkten Wärmetauscher statt. Bei der GB-A-1311757, die ein ähnliches Verfahren beschreibt, ist eine Voreindampfung vorgesehen, wobei die Kristalle in weiterer Folge in einem Wirbelschichtreaktor zersetzt werden.

Besonders für die Rückgewinnung von Salpetersäure aus $NO_x$ sind tiefe Temperaturen (< 50°C) erforderlich.
Bei diesem Prozeß kommt es jedoch aufgrund der Wasser-Kondensation aus den Abgasen zu einer unerwünschten Verdünnung der regenerierten Säure und es müssen zum Erreichen der für die Verwendung in der Beize gewünschten Konzentration erhebliche Mengen an Frischsäure beigegeben werden. Die dauernde Volumszunahme macht es auch notwendig, Abbeize oder Regenerat zu verwerfen oder zu neutralisieren. Selbst bei der Aufspaltung der regenerierten Säure in eine HF-reiche und eine dünnere Säure muß zwar weniger aufgeschärft werden, jedoch ist für die Dünnsäure nicht immer Bedarf gegeben, sodaß diese teilweise verworfen bzw. neutralisiert werden muß.

Außerdem geht bei Erhöhung der HF-Konzentration im Regenerat durch Aufspaltung in HF-reiche und HF-arme Säure automatisch die Ausbeute an Salpetersäure zurück, wobei die konzentrierte regenerierte Säure nur den kondensierbaren $HNO_3$-Anteil enthält und durch Salpetersäurezugabe aufgeschärft werden muß, was wieder eine Verdünnung nach sich zieht.

Auch ist bisher ein hoher Energieaufwand erforderlich, da einerseits für die Regenerierung beim Sprührösten die Abbeize verdampft werden muß und andererseits nach dem Venturiwäscher der Abgasstrom wieder kondensiert werden muß.

Die Aufgabe der Erfindung ist daher ein Verfahren, bei dem die oben genannten Nachteile vermieden werden können und bei dem ohne große Adaptierungsmaßnahmen auch bei bereits bestehenden Anlagen eine wirtschaftlicher Säurerückgewinnung gewährleistet ist. Eine weitere Aufgabe war eine Anlage zur Durchführung dieses Verfahrens.

Zur Lösung dieser Aufgabe ist erfindungsgemäß vorgesehen, daß die Abbeize für die Voreindampfung durch indirekten Wärmetausch mit dem Medium zumindest einer Absorptions- bzw. Kondensationskolonne erwärmt, wonach dieses Medium wieder der Kolonne aufgegeben wird und die Dämpfe aus der Voreindampfung direkt einem alkalischen Gaswäscher zugeführt werden. Damit werden einerseits die Abgase aus dem Pyrohydrolyse-Reaktor gekühlt und kondensiert und die dabei erhaltene Wärmemenge wird verwendet um die Abbeize aufzuheizen und einzudampfen. Gleichzeitig kann Kühlwasser in der Kolonne selbst eingespart werden.

Neue Anlagen können für gleiche Abbeize-Mengen aufgrund der geringeren Ausgangsmengen für die pyrohydrolytische Behandlung mit kleineren Reaktoren und nachfolgenden Anlagenteilen, beispielsweise Venturis oder Absorptions- bzw. Kondensationskolonnen, ausgerüstet und dadurch wirtschaftlicher werden.

Wenn vorteilhafterweise eine Voreindampfung von 5 bis 30%, vorzugsweise von 10 bis 20%, vorgenommen wird, kann eine Konzentration im Regenerat erzielt werden, die eine Säureaufteilung nicht mehr erforderlich macht.

Vorteilhafterweise wird unmittelbar nach dem Wärmetausch ein Teil des abgekühlten Mediums aus der Absorptions- bzw. Kondensationskolonne als erstes Regenerat abgezogen und allenfalls der Wiederverwendung zugeführt. Damit liegt das Regenerat gleich und in einfacher Weise in gekühlter Form vor.

Die zweite Aufgabe wird durch eine Vorrichtung zur Gewinnung bzw. Rückgewinnung von Säuren, aus metallhaltigen Lösungen dieser Säuren gelöst, umfassend eine Zuleitung für die Lösung, einen Pyrohydrolyse-Reaktor, und zumindest eine Absorptions- oder Kondensationskolonne, mit der die Abgasleitung des Reaktors verbunden ist wobei eine Einrichtung zur Voreindampfung und Aufkonzentrierung der Lösung vorgesehen ist. Sie ist dadurch gekennzeichnet, daß die Einrichtung zur Voreindampfung und Aufkonzentrierung einen indirekten Wärmetauscher beinhaltet, der Verdampfer über eine Leitung mit einem alkalischen Gaswäscher verbunden ist und der indirekte Wärmetauscher mit dem Kreislauf zumindest einer Absorptions- bzw. Kondensationskolonne oder mit dem Kreislauf eines Kondensators in der Abgasleitung des Reaktors verbunden ist. Auf diese Weise kann der Wärmeinhalt des Mediums dieser Kolonne zur Aufheizung der Lösung verwendet werden, wobei gleich das Medium unter Einsparung von Kühlwasser auf die in der Kolonne gewünschte Temperatur abgekühlt werden kann. Damit können alle in den vorhergehenden Absätzen genannten Vorteile bei einfacher Ausführungsform der Anlage verwirklicht werden, wobei selbst bei bereits bestehenden Anlagen diese leicht und ohne großen Aufwand für das erfindungsgemäße Verfahren adaptiert werden können.

Vorteilhafterweise sind in Strömungsrichtung hinter dem indirekten Wärmetauscher Ableitungen für das abgekühlte Medium vorgesehen.

In der nachfolgenden Beschreibung soll die Erfindung anhand nicht einschränkender Ausführungsbeispiele unter Bezugnahme auf die beigefügte Zeichnungsfiguren näher erläutert werden.

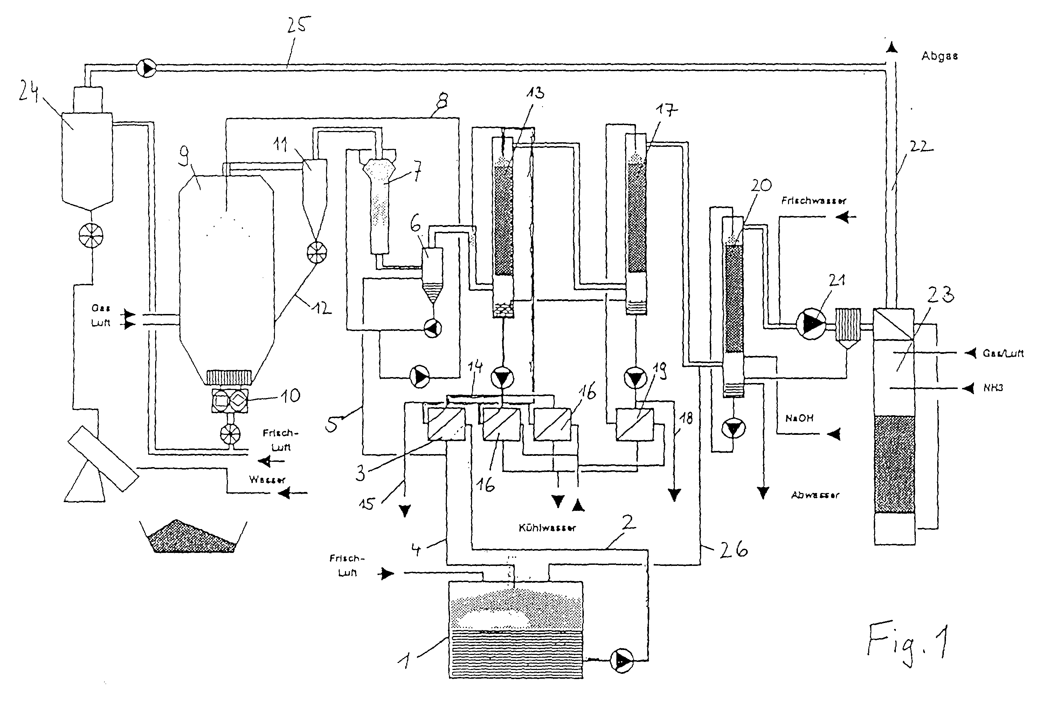

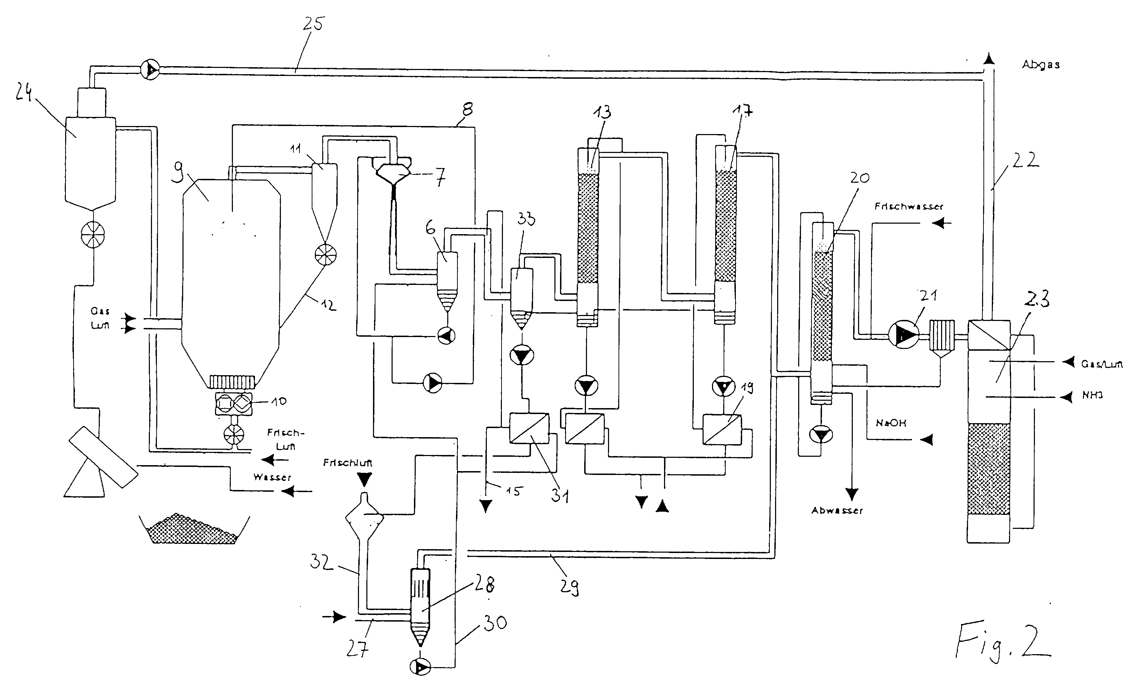

Dabei zeigt die Fig. 1 eine Beizsäure-Regenerationsanlage mit Lagertank, Sprühröstreaktor und zwei Absorptionskolonnen für das Sprühröst-Abgas sowie einem Wärmetauscher zur Voreindampfung der Abbeize und die Fig. 2 eine Ausführungsform der Anlage ohne Lagertank.

Bei der Ausführungsform der Fig. 1 gelangt die verbrauchte Abbeize, enthaltend die freien Säuren (Flußsäure oder Salzsäure und Salptersäure) und die gelösten Metalle, aus einem Zwischelagertank 1 über eine Leitung 2 in einen Wärmetauscher 3, wo die Abbeize durch Wärmetausch mit einem heißen Medium erwärmt wird. Das Konzentrat wird über die Leitung 4 wieder dem Lagertank 1 zugeführt und in diesen eingesprüht, wodurch es aufgrund der Aufheizung, der großen Oberfläche und der durchgeleiteten Luft zum Verdampfen eines Teils der Flüssigkeit kommt, die vorzugsweise auf 10 bis 25% voreingedampft und somit auch vorkonzentriert wird, während die Säuren und Metallsalze weitestgehend im Konzentrat verbleiben. Ein anderer Teil der erwärmten Abbeize wird über eine Leitung 5 einem Abscheider 6 aufgegeben.

Das Konzentrat aus dem Abscheider 6 wird wieder in zwei Anteile aufgeteilt, wobei ein Teil im Strahlwäscher 7 zur Reinigung des Abgases der Pyrohydrolyse verwendet und der andere Teil über die Leitung 8 dem Sprühröst-Reaktor 9 für die pyrohydrolytische Umsetzung der Metallsalze in die freien Säuren und Metalloxide aufgegeben wird. Die Metalloxide werden vom Boden des Reaktors 9 über herkömmliche Einrichtungen 10 ausgetragen, ebenso wie die im Zyklon 11 abgeschiedenen, aus dem Reaktor 9 mitgerissenen Staubanteile, die über eine Leitung 12 in den Reaktor 9 rückgeleitet werden.

Die Sprühröstabgase aus dem Reaktor 9 gelangen nach Passieren des Zyklons 11, des Strahlwäschers 7 und des Abscheiders 6 in eine Absorptions- und Kondensationskolonne 13. Das Medium der ersten Kondensationsstufe 13 wird im Kreislauf über den Wärmetauscher 3 geführt, um dort die Abbeize zur Voreindampfung zu erwärmen. Ein Teil des abgekühlten Mediums aus dem Wärmetauscher 3 wird über die Leitung 15 als erstes Regenerat abgeleitet und steht für die Wiederbenutzung als Beizlösung zur Verfügung. Der andere Teil wird wieder im Kreislauf des Kondensators 13 aufgegeben.

Das aus dem Kondensator 13 abgezogene Medium wird aber nur zum Teil über den Wärmetauscher 3 geführt, der andere Teil wird über zumindest einen, vorzugsweise zwei, mit Kühlwasser gespeiste Wärmetauscher 16 geführt, um das aufgrund der stark exothermen Reaktionen in der Kolonne 13 sehr heiße Medium ausreichend abzukühlen.

Von der ersten Kondensationsstufe 13 gelangt das Abgas aus dem Sprühröstreaktor 9 noch in eine weitere Absorptions- bzw. Kondensationskolonne 17, wo das Medium ebenfalls im Kreislauf geführt wird, wo ebenfalls ein Teil davon als Regenerat in Kolonne 1 und von dort in den Kondensator 13 überläuft, von dort über eine Leitung 15 abgezogen wird und zur Wiederbenutzung in der Beizanlage zur Verfügung steht.

Schließlich gelangt das Abgas von Kolonne 2 noch in einen alkalischen Gaswäscher 20 und wird letztendlich über den Abgasventilator 21, der bereits für den zum Gastransport durch die Anlage notwendigen Unterdruck gesorgt hat, und den Abgaskamin 22 ins Freie geleitet. Allenfalls kann noch eine DeNO$_x$-Anlage 23 zur katalytischen Reduktion von NO$_x$ mit Ammoniak oder Harnstoff vorgesehen sein.

Als zusätzliche Anlage kann austragsseitig am Reaktor 9 noch allenfalls eine Abscheideanlage 24 für mit den Feststoffen aus dem Reaktor gelangte Gase vorgesehen sein, deren Gasableitung 25 ebenfalls in den Abgaskamin 22 mündet, während die festen Bestandteile vom Boden der Anlage 24 ausgetragen werden.

Der im Lagertank 1 verdampfte Anteil der Ausgangslösung wird über eine Leitung 26 in den alkalischen Gaswäscher 20 geleitet, um die darin enthaltenen Säurespuren vor dem Abgeben in die Umgebung zu entfernen.

Bei der etwas anderen Ausführungsform der Anlage gemäß Fig. 2 - in der gleiche Anlagenteile wie in Fig. 1 auch mit den gleichen Bezugszeichen versehen sind - wird die Abbeize als Ausganglösung über eine Leitung 27 einem Verdampfer 28 zugeführt, dessen Gasabzug 29 mit dem alkalischen Abgaswäscher 20 verbunden ist. Aus dem Flüssigkeitssumpf des Verdampfers 28 wird ein Teil der eingeleiteten Abbeize über die Leitung 30 dem ersten Abscheider 6 der Sprühröst-Absorptions- bzw. Kondensations-Anlage zugeleitet, von welchem Anteil wieder - wie bereits beschrieben - ein Teil in den Reaktor 9 eingesprüht und der andere Teil im Strahlwäscher 7 zur Abgasreinigung verwendet wird.

Der andere Teil der Abbeize aus dem Verdampfer 28 wird einem Wärmetauscher 31 zugeführt, in welchem er erwärmt wird, sodaß der Wasser-Anteil der Abbeize beim anschließenden Einsprühen in die Frischluftzufuhr 32 des Verdampfers 28 verdampft und über den Gasabzug 29 dem alkalischen Wäscher 20 zugeleitet werden kann.

Nach dem bereits beschriebenen ersten Abscheider 6 ist ein von Kolonne 1 getrennter weiterer Kondensator 33 vorgesehen, dessen Kondensatabzug in den Wärmetauscher 31 mündet. Das heiße Kondensat aus dem Kondensator 33 erwärmt im Wärmetauscher 31 die Abbeize aus dem Verdampfer 28, wird selbst dabei abgekühlt und kann zum Teil als Regenerat nach dem Wärmetauscher 31 abgezogen und zum anderen Teil in die Abgasleitung vor dem Kondensator 33 eingesprüht werden.

Nach dem Kondensator 33 tritt das vorgereinigte Abgas aus dem Sprühröstreaktor 9 wieder in eine erste Absorptions- bzw. Kondensationskolonne 13, eine zweite Absorptions- bzw. Kondensationskolonne 17 ein und schließlich nach dem alkalischen Gaswäscher 20 und allenfalls der DeNO$_x$-Anlage 23 über den Abgaskamin 22 ins Freie aus.

Der Flüssigkeitssumpf der Kolonnen 13 und 17 werden in den Flüssigkeitssumpf des Kondensators 33 eingeleitet, von wo diese mit den Säuren angereicherte Flüssigkeit zusammen mit dem Kondensat des Reaktor-Abgases über den Wärmetauscher 31 als wieder für die Beize verwendbares Regenerat abgezogen wird.

Im folgenden soll die Erfindung noch anhand von zwei Ausführungsbeispielen näher erläutert werden.

## AUSFÜHRUNGSBEISPIEL 1:

In einer Pilotanlage, die in ihrem Aufbau im wesentlichen der Fig. 2 entspricht, wurde eine salzsäurehältige Lösung folgender Zusammensetzung behandelt:

| | |
|---|---|
| Fe | 34,1 g/l |
| Mg | 14,5 g/l |
| Al | 6,8 g/l |
| Cl$^-$ | 180,5 g/l |

Diese Lösung wurde in einer Menge von 26 l/h auf den Vorverdampfer (28) aufgegeben. In diesem Verdampfer wurde mit Hilfe des Abgasventilators Frischluft mit einer Temperatur von 31 °C angesaugt, die Abgastemperatur nach dem Verdampfer betrug 62 °C. Der Verdampfer wurde indirekt mit ablaufender regenerierter Säure mit einer Eingangstemperatur von 72 °C und einer Ausgangstemperatur von 62 °C beheizt. Die Menge der anfallenden vorkonzentrierten Lösung betrug 22,6 l/h, d.h. die Eindampfung betrug

$$\frac{26 - 22,6}{26} = 13\ \%$$

Der Chloridgehalt betrug 207,5 g/l, d.h. die Aufkonzentrierung betrug

$$\frac{207,5 - 180,5}{180,5} = 14,9\ \%$$

Diese vorkonzentrierte Lösung wurde zur Gänze der Venturivorlage (6) zugeführt und von dort nach weiterer Aufkonzentrierung in den Reaktor (9) gesprüht. Die Aufgabe auf den Reaktor betrug 16,5 l/h.

## AUSFÜHRUNGSBEISPIEL 2:

In der Pilotanlage (wie bei Beispiel 1) wurde eine synthetische Abbeize aus Edelstahlbeizen mit folgender Zusammensetzung behandelt:

| | |
|---|---|
| Fe | 35 g/l |
| Cr | 7 g/l |
| Ni | 6 g/l |
| F$^-$ | 45 g/l |
| HNO$_3$ | 118 g/l |

Diese Lösung wurde in einer Menge von 20 l/h auf den Vorverdampfer (28) aufgegeben. In diesen Verdampfer wurde Frischluft mit einer Temperatur von 28 °C angesaugt. Die Abgastemperatur nach dem Verdampfer betrug 58 °C. Der Verdampfer wurde indirekt mit ablaufender regenerierter Säure mit einer Eingangstemperatur von 67 °C beheizt. Die Menge der anfallenden vorkonzentrierten Lösung betrug 17,9 l/h, d. h. die Eindampfung betrug

$$\frac{20 - 17,9}{20} = 10,5\ \%$$

Der Gehalt an Fluorid betrug 50 g/l, d.h. die Aufkonzentrierung betrug

$$\frac{50 - 45}{45} = 11,1 \%.$$

Wie oben wurde die vorkonzentrierte Lösung der Venturivorlage (6) und von dort dem Reaktor (9) zugeführt.

**Patentansprüche**

1. Verfahren zur Gewinnung bzw. Rückgewinnung von Säuren, aus metallhaltigen Lösungen dieser Säuren durch pyrohydrolytische Behandlung und anschließende Absorption und/oder Kondensation der dabei gebildeten Gase in einer wässrigen Absorptionslösung, wobei die entstehenden Feststoffe abgezogen werden, wobei die metallhaltige Lösung noch vor der Pyrohydrolyse einer Voreindampfung unterzogen wird, dadurch gekennzeichnet, daß die metallhaltige Lösung für die Voreindampfung durch indirekten Wärmetausch mit dem Medium zumindest einer Absorptions- bzw. Kondensationskolonne erwärmt wird, wonach dieses Medium wieder der Kolonne aufgegeben wird und die Dämpfe aus der Voreindampfung direkt einem alkalischen Gaswäscher zugeführt werden.

2. Verfahren nach Anspruch 1, dadurch gekennzeichnet, daß die Säuren aus der Gruppe Salzsäure, Flußsäure oder Salpetersäure sind.

3. Verfahren nach Anspruch 1 oder 2, dadurch gekennzeichnet, daß die Abbeize durch indirekten Wärmetausch mit dem Medium der ersten Absorptions- bzw. Kondensationskolonne erwärmt wird.

4. Verfahren nach einem der Ansprüche 1 bis 3, dadurch gekennzeichnet, daß eine Voreindampfung von 5 bis 30% vorgenommen wird.

5. Verfahren nach Anspruch 4, dadurch gekennzeichnet, daß eine Voreindampfung von 10 bis 20%, vorgenommen wird.

6. Verfahren nach einem der Ansprüche 1 bis 5, dadurch gekennzeichnet, daß unmittelbar nach dem indirekten Wärmetausch ein Teil des abgekühlten Mediums aus der Absorptions- bzw. Kondensationskolonne als erstes Regenerat abgezogen und allenfalls der Wiederverwendung zugeführt wird.

7. Vorrichtung zur Gewinnung bzw. Rückgewinnung von Säuren, aus metallhaltigen Lösungen dieser Säuren, umfassend eine Zuleitung für die Lösung, einen Pyrohydrolyse-Reaktor (9), und zumindest eine Absorptions- oder Kondensationskolonne (13, 17), mit der die Abgasleitung des Reaktors (9) verbunden ist, wobei eine Einrichtung (1, 3, 4; 25, 31, 32) zur Voreindampfung und Aufkonzentrierung der Lösung vorgesehen ist, dadurch gekennzeichnet, daß die Einrichtung (1, 3, 4; 28, 31, 32) zur Voreindampfung und Aufkonzentrierung einen indirekten Wärmetauscher (3, 31) beinhaltet, der Verdampfer (1; 28) über eine Leitung (26; 29) mit einem alkalischen Gaswäscher (20) verbunden ist und der indirekte Wärmetauscher (3, 31) mit dem Kreislauf zumindest einer Absorptions- bzw. Kondensationskolonne (13) oder mit dem Kreislauf eines Kondensators (33) in der Abgasleitung des Reaktors (9) verbunden ist.

8. Vorrichtung nach Anspruch 7, dadurch gekennzeichnet, daß der indirekte Wärmetauscher (3) mit dem Kreislauf der ersten Absorptions-bzw. Kondensationskolonne (13) verbunden ist.

9. Vorrichtung nach Anspruch 7 oder 8, dadurch gekennzeichnet, daß in Strömungsrichtung hinter dem indirekten Wärmetauscher (3, 31) Ableitungen für das abgekühlte Medium vorgesehen sind.

**Claims**

1. Process for extraction respectively recovery of acids from metal-containing solutions of such acids in a pyro-hydrolytic treatment and subsequent absorption and/or condensation of the gases formed in the process in an aqueous absorption solution, with the solids produced being extracted, with the metal-containing solution being subjected to pre-evaporation even before pyro-hydrolysis, characterised by the metal-containing solution being heated for pre-evaporation by indirect heat exchange with the medium of at least one absorption respectively condensation column, whereupon this medium is then fed back to the column and the vapours from the pre-evaporation are routed directly to an alkali gas scrubber.

2. Process according to Claim 1, characterised by the acids being hydrochloric, hydrofluoric or nitric adds.

3. Process according to Claim 1 or 2, characterised by the waste pickling liquid being heated by indirect heat exchange with the medium of the first absorption respectively condensation column.

4. Process according to one of the Claims 1 to 3, characterised by pre-evaporation of 5 - 30% being carried out.

5. Process according to Claim 4, characterised by pre-evaporation of 10 - 20% being carried out.

**6.** Process according to one of the Claims 1 to 5, characterised by part of the cooled-off medium being extracted immediately after the indirect heat exchange from the absorption respectively condensation column as first regenerate and possibly being reused.

**7.** Device for extraction respectively recovery of acids from metal-containing solutions of such acids, comprising an infeed pipe for the solution, a pyro-hydrolytic reactor (9) and at least one absorption respectively condensation column (13, 17) which is connected to the exhaust pipe of the reactor (9), with a device (1, 3, 4; 28, 31, 32) being provided for pre-evaporation and concentration of the solution, characterised by the device (1, 3, 4; 28, 31, 32) for pre-evaporation and concentration containing an indirect heat exchanger (3, 31), the evaporator (1; 28) being connected via pipe (26; 29) with an alkali gas scrubber (20) and the indirect heat exchanger (3, 31) being connected with the loop of at least one absorption respectively condensation column (13) or the loop of a condensator (33) in the exhaust pipe of the reactor (9).

**8.** Device according to Claim 7, characterised by the indirect heat exchanger (3) being connected with the loop of the first absorption respectively condensation column (13).

**9.** Device according to Claim 7 or 8, characterised by discharges being provided for the cooled-off medium downstream of the indirect heat exchanger (3, 31) viewed in the flow direction.

**Revendications**

**1.** Procédé d'extraction respectivement de récupération d'acides à partir des solutions métallifères de ces acides dans un traitement pyro-hydrolytique avec absorption et/ou condensation subséquente des gaz formés au cours du procédé dans une solution d'absorption aqueuse, les solides produits étant extraits, la solution métallifère étant soumise à une évaporation préliminaire même avant la pyrohydrolyse, caractérisé en ce que la solution métallifère est chauffée pour évaporation préliminaire par échange thermique indirect avec le milieu d'au moins une colonne d'absorption respectivement de condensation, sur quoi ce milieu se trouve re-alimenté à la colonne et les vapeurs provenant de cette évaporation préliminaire amenées directement à un laveur de gaz alcalin.

**2.** Procédé selon la revendication 1, caractérisé en ce que les acides sont des acides chlorhydriques, fluorhydriques ou nitriques.

**3.** Procédé selon la revendication 1 ou 2, caractérisé en ce que le liquide de décapage usé est chauffé par échange thermique indirect avec le milieu de la première colonne d'absorption respectivement de condensation.

**4.** Procédé selon l'une des revendications 1 à 3, caractérisé en ce qu'une évaporation préliminaire de 5 - 30% est effectuée.

**5.** Procédé selon la revendication 4, caractérisé en ce qu'une évaporation préliminaire de 10-20% est effectuée.

**6.** Procédé selon l'une des revendications 1 à 5, caractérisé en ce qu'une partie du milieu refroidi est extraite à partir de la colonne d'absorption respectivement de condensation immédiatement après l'échange thermique indirect en tant que premier liquide régénéré, ce liquide pouvant être réutilisé ultérieurement.

**7.** Dispositif d'extraction respectivement de récupération d'acides à partir des solutions métallifères de ces acides, comportant un tuyau d'amenée pour la solution, un réacteur pyro-hydrolytique (9) et au moins une colonne d'absorption respectivement de condensation (13, 17) qui est liée au tuyau de gaz d'échappement du réacteur (9), un dispositif (1, 3, 4; 28, 31, 32 ) étant prévu pour évaporation préliminaire et concentration de la solution, caractérisé en ce que le dispositif d'évaporation préliminaire et de concentration (1, 3, 4; 28, 31, 32) comporte un échangeur de chaleur indirect (3, 31), l'évaporateur (1; 28) étant lié à un laveur de gaz alcalin (20) à travers un tuyau (26; 29) et l'échangeur de chaleur indirect (3, 31) étant lié au circuit d'au moins une colonne d'absorption respectivement de condensation (13) ou au circuit d'un condensateur (33) dans le tuyau de gaz d'échappement du réacteur (9).

**8.** Dispositif selon la revendication 7, caractérisé en ce que l'échangeur de chaleur indirect (3) est lié au circuit de la première colonne d'absorption respectivement de condensation (13).

**9.** Dispositif selon la revendication 7 ou 8, caractérisé en ce que des décharges sont prévues pour le milieu refroidi en aval de l'échangeur de chaleur indirect (3, 31) vu au sens d'écoulement.

25

24

9

11

8

13

17

Abgas

22

Frischwasser

20

7

6

21

23

Gas/Luft

NH3

Gas Luft

12

10

Frisch-Luft

Wasser

5

3

14

16

16

16

19

18

15

NaOH

Kühlwasser

2

26

Abwasser

Frisch-Luft

1

Fig. 1

Fig. 2